## Europäisches Patentamt
## European Patent Office
## Office européen des brevets

(19)

(11) Veröffentlichungsnummer: **0 195 740**
**B1**

(12) **EUROPÄISCHE PATENTSCHRIFT**

(45) Veröffentlichungstag der Patentschrift:
31.01.90

(51) Int. Cl.⁴: **B66C 6/00**, B66C 7/08

(21) Anmeldenummer: 86730033.7

(22) Anmeldetag: 27.02.86

(54) Kastenprofil.

(30) Priorität: 20.03.85 DE 3510051

(43) Veröffentlichungstag der Anmeldung:
24.09.86 Patentblatt 86/39

(45) Bekanntmachung des Hinweises auf die Patenterteilung:
31.01.90 Patentblatt 90/5

(84) Benannte Vertragsstaaten:
AT BE CH DE FR IT LI LU NL SE

(56) Entgegenhaltungen:
DE-A- 1 534 036
DE-A- 2 107 567
DE-B- 1 152 516
DE-B- 1 271 935
FR-A- 1 123 262
FR-A- 1 162 050
GB-A- 559 038
GB-A- 1 008 983
US-A- 2 175 087
US-A- 3 319 802
US-A- 3 505 961

(73) Patentinhaber: MANNESMANN Aktiengesellschaft,
Mannesmannufer 2, D-4000 Düsseldorf 1(DE)

(72) Erfinder: Staggl, Roland, Brunnenweg 9,
D-5802 Wetter 2(DE)
Erfinder: Sprung, Hartwig, Am Brasberg 71,
D-5802 Wetter 4(DE)
Erfinder: Stober, Manfred, Dipl.-Ing., Am
Schichtmeister 3, D-5810 Witten(DE)

(74) Vertreter: Meissner, Peter E., Dipl.-Ing. et al, Meissner &
Meissner Patentanwälte Herbertstrasse 22,
D-1000 Berlin 33 Grunewald(DE)

## Beschreibung

Die Erfindung betrifft ein Kastenprofil mit daran in Längsrichtung befestigten Führungsschienen.

Führungsschienen sind im allgemeinen mit dem Kastenprofil verschweißt (siehe DE-GM 8 334 842) und daher nach dem Verschweißen nicht gerade genug, um auch präzisen Anforderungen an die Führung gerecht zu werden. Außerdem ist das Verschweißen einer Führungsschiene über die ganze Länge oder auch abschnittsweise mit dem Hauptprofil arbeitsaufwendig und somit teuer.

Aus der US-A 3 319 802 ist ein Kastenprofil mit daran angeschraubten Führungsschienen bekannt. Bei Ausdehnungsunterschieden zwischen dem Kastenprofil und den Schienen werden die Schrauben auf Scherung beansprucht, und es kann unabhängig davon zu einem Verkanten kommen, was sich wiederum in unterschiedlichen Längenänderungen auswirkt.

Derartige unterschiedliche Längenänderungen lassen sich auch nicht bei dem Kranbrückenträger nach der DE-A 1 271 935 vermeiden, wobei hier auf die Träger in Abständen genietete Führungsstücke die Laufschienen halten.

Aufgabe der Erfindung ist es daher, ein mit einer Führungsschiene versehenes Kastenprofil so zu gestalten, daß es mit geringem Aufwand mit hoher Präzision herstellbar ist. Diese Aufgabe wird dadurch gelöst, daß das Kastenprofil auf den sich gegenüberliegenden Seiten Verbindungsflansche für dazwischenliegende Führungsschienen hat. Diese sind mittels die Schrauben umgebender Spannstifte mit den Verbindungsflanschen des Kastenprofils verbunden und dienen dann nicht nur der Führung, sondern erhöhen auch die Steifigkeit des Kastenprofils beachtlich. Dieser Vorteil tritt besonders ein, wenn das Kastenprofil aus Leichtmetall und die Führungsschienen aus Stahl bestehen. Durch das Hinzufügen der Stahlschienen an den Kastenträger erhöht sich dessen Steifigkeit gegen Biegen um mehr als 100%. Ein nur aus Stahl bestehender Träger gleicher Steifigkeit wäre um ca. 65% schwerer als bei Verbundbauweise und würde bei einer Länge von ca. 10 Metern, wie sie bei Portalen von Industrierobotern oft vorkommen, schon zu erheblichen Eigenschwingungen und zu einer Durchbiegung führen, die ein unzulässig ungenaues Arbeiten des Industrieroboters zur Folge hätte.

Die thermische Ausdehnung eines aus zwei verschiedenen Werkstoffen bestehenden Trägers liegt im Bereich zwischen den Ausdehnungskoeffizienten der Einzelschienen. Die Herstellkosten sind für verschiedene Träger-stärken gering, denn das mit relativ hohen Werkzeugkosten verbundene stranggepreßte Kastenprofil kann für mehrere Trägerstärken verwendet werden, wobei die gewünschte Stärke des Trägers durch unterschiedlich starke preiswerte Führungsschienen erreicht wird.

Erforderlichenfalls kann eine der Führungsschienen mit einer Verzahnung für einen Verschiebeantrieb versehen sein. Das Kastenprofil kann ohne zusätzliche Mehrkosten an den Ecken Einschiebenuten für Schraubenköpfe oder Nutensteine haben, damit die verschiedensten Gegenstände an dem Kastenprofil problemlos befestigt werden können.

Zum Herstellen der präzisen Verschraubung zwischen den Anschraubflanschen und den Führungsschienen dient eine mit Bohrbüchsen versehene Bohrvorrichtung, die an der Führungsschiene entlang geführt und zum herstellen der Bohrungen angehalten wird, wobei die Maschine vorzugsweise auf den sich gegenüberliegenden Seiten des Kastenträgers Bohrer und Bohrbüchsen hat.

Um zu erreichen, daß belastete Tragprofile keine sichtbare Durchbiegung aufweisen, bedarf es in der Regel eines großen Aufwandes, um die entsprechende Trägerüberhöhung zu erzielen (Wärmebehandlung/Segmentbauweise). Beim Kastenprofil wird die notwendige Überhöhung einfach dadurch hergestellt, daß die Einzelprofile in entsprechend gekrümmtem Zustand untereinander verstiftet und verschraubt werden.

Mehrere Ausführungsbeispiele der Erfindung sind in der Zeichnung dargestellt und im folgenden erläutert. Es zeigen:

Fig. 1 einen Querschnitt durch ein Kastenprofil mit daran befestigten Führungsschienen,

Fig. 2 bis 7 andere Ausführungsbeispiele der Führungsschienen,

Fig. 8 eine Seitenansicht eines überhöhten Kastenprofils.

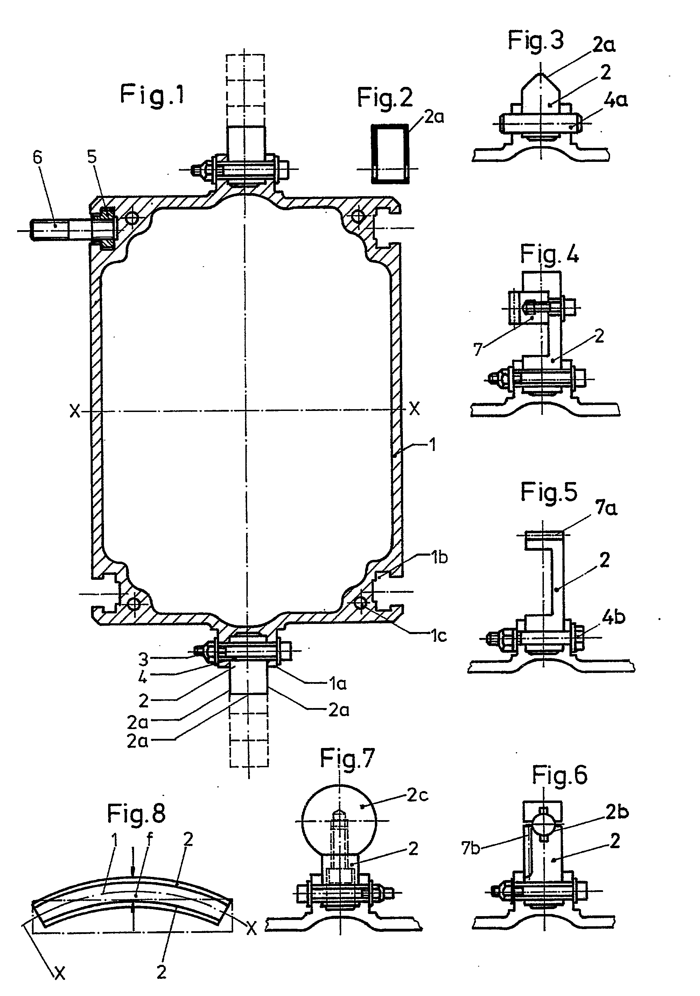

Fig. 1 zeigt ein stranggepreßtes Kastenprofil 1 aus Leichtmetall mit oberen und unteren Verbindungsflanschen 1a und zwischen diesen angeordneten Führungsschienen 2 aus Stahl. Das Kastenprofil hat außerdem an den Ecken Einschiebenuten 1b für Nutensteine 5 und in diese eingedrehte Schrauben 6 für Stützen, Haltevorrichtungen, Schaltleisten usw. Außerdem hat das Kastenprofil 1 an den Stirnseiten Bohrungen 1c zum Befestigen nicht gezeichneter Stirnplatten, mit den das Innere des Kastenträgers abgedichtet wird. Durch die Verbindungsflansche 1a und Führungsschienen 2 führen von Schwerspannstiften 4 umgebene Schrauben 3, die bei einem ca. 300 mm hohen Kastenträger in Abständen von ca. einem 1/2 Meter vorhanden sind. Zum Variieren der Steifigkeit des Verbundträgers und zum Anbringen unterschiedlich großer Führungsflächen 2a können die Führungsschienen 2 unterschiedlich stark sein, wie durch gestrichelte Linien in Fig. 1 angedeutet ist.

Wenn es bei dem Verbundprofil nur auf die Qualität der Führungsflächen 2a ankommt, kann des Führungsprofil 2 ein Vierkant-Hohlprofil sein, wie in Fig. 2 dargestellt.

Fig. 3 zeigt eine mit Schwerspannstiften 4a befestigte Führungsschiene 2 mit prismenförmig angeordneten Führungsflächen 2a für daran entlangfahrende, nicht gezeichnete Rollen.

Fig. 4 zeigt eine U-förmige Führungsschiene 2 mit einer in dem U-Profil angeordneten Zahnstange 7 für den Eingriff eines Antriebes.

Beim Ausführungsbeispiel nach Fig. 5 ist eine U-förmige Führungsschiene 2 an der Oberfläche mit einer Verzahnung 7a versehen und mit Paßschrauben (4b) am Kastenprofil befestigt.

Fig. 6 zeigt eine Führungsschiene 2 mit einer Verzahnung 7b und einer Führungsfläche 2b für eine Kugelführung.

Beim Ausführungsbeispiel nach Fig. 7 ist die Führungsschiene 2 mit einer abgeflachten Rundstabführung 2c für daran entlang rollende Kugelhülsen versehen, die einen Maschinenteil bei geringem Rollwiderstand mit hoher Präzision führen.

Fig. 8 zeigt eine Seitenansicht eines überhöhten Kastenprofil 1 mit angeschraubten Führungsschienen 2 spannungsfrei seitlich aufgelegt. Die Überhöhung "f" entspricht der Durchbiegung des belasteten Trägers, der dann eine Gerade bildet, wenn er belastet ist.

## Patentansprüche

1. Kastenprofil mit daran in Längsrichtung befestigten Führungsschienen, dadurch gekennzeichnet, daß das Kastenprofil (1) auf sich gegenüberliegenden Seiten neben den Führungsschienen (2) je zwei Verbindungsflansche (1a) für Verbindungsmittel (3, 4) hat.

2. Kastenprofil nach Anspruch 1, dadurch gekennzeichnet, daß die Führungsschienen (2) über durch diese und die Verbindungsflansche (1a) geführte Spannstifte (4) mit dem Kastenprofil (1) verbunden sind.

3. Kastenprofil nach Anspruch 2, dadurch gekennzeichnet, daß die Führungsschienen (2) mittels durch die Spannstifte (4) geführte Schrauben (3) zwischen die Verbindungsflansche (1a) eingeklemmt sind.

4. Kastenprofil nach Anspruch 1, dadurch gekennzeichnet, daß die Führungsschienen (2) über durch diese und die Verbindungsflansche (1a) geführte Paßstifte (4a) mit dem Kastenprofil (1) verbunden sind.

5. Kastenprofil nach Anspruch 1, dadurch gekennzeichnet, daß die Führungsschienen (2) über durch diese und die Verbindungsflansche (1a) geführte Paßschrauben (4b) mit dem Kastenprofil (1) verbunden sind.

## Claims

1. A box section with guide rails longitudinally attached thereto, characterized in that the box section (1) is provided on opposite sides thereof in addition to the guide rails (2) with respectively two connecting flanges (1a) for attachment or connecting means (3, 4).

2. A box section according to claim 1, characterized in that the guide rails (2) are connected to the box section via dowel pins (4) guided therethrough the attachment or connecting flanges (1a).

3. A box section according to claim 2, characterized in that the guide rails (2) are clamped between the connecting flanges (1a) by means of bolts (3) passed through the dowel pins (4).

4. A box section according to claim 1, characterized in that the guide rails (2) are connected to the box section (1) via dowel pins (4a) passed therethrough and through the connecting flanges (1a).

5. A box section according to claim 1, characterized in that the guide rails (2) are connected to the box section (1) via fitted or reamed bolts (4b) passed therethrough and through the connecting flanges (1a).

## Revendications

1. Profilé en caisson, comportant des rails de guidage qui y sont fixés en direction longitudinale, caractérisé en ce que le profilé en caisson (1) présente, sur des côtés opposés, à côté des rails de guidage (2), à chaque fois deux pattes de liaison (1a) pour des moyens de liaison (3, 4).

2. Profilé selon la revendication 1, caractérisé en ce que les rails de guidage (2) sont reliés au profilé (1) par des chevilles de serrage (4) guidées à travers ceux-ci et les pattes de liaison (1a).

3. Profilé selon la revendication 2, caractérisé en ce que les rails de guidage (2) sont serrés entre les pattes de liaison (1a) au moyen de vis (3) guidées dans les chevilles (4).

4. Profilé selon la revendication 1, caractérisé en ce que les rails de guidage (2) sont reliés au profilé (1) par des goupilles calibrées (4a) guidées à travers ceux-ci et les pattes de liaison (1a).

5. Profilé selon la revendication 1, caractérisé en ce que les rails de guidage (2) sont reliés au profilé (1) par des boulons calibrés (4b) guidés à travers ceux-ci et les pattes de liaison (1a).

Fig.1

Fig.2

Fig.3

Fig.4

Fig.5

Fig.6

Fig.7

Fig.8